Europäisches Patentamt

**European Patent Office**

**Office européen des brevets**

(19)

(11) Numéro de publication : **0 031 767**
**B1**

(12)
# FASCICULE DE BREVET EUROPÉEN

(45) Date de publication du fascicule du brevet :
**21.03.84**

(51) Int. Cl.³ : **F 16 L   3/18**

(21) Numéro de dépôt : **80401822.4**

(22) Date de dépôt : **18.12.80**

(54) **Dispositif de maintien d'une tuyauterie.**

(30) Priorité : **21.12.79 FR 7931401**

(43) Date de publication de la demande :
**08.07.81 Bulletin 81/27**

(45) Mention de la délivrance du brevet :
**21.03.84 Bulletin 84/12**

(84) Etats contractants désignés :
**BE DE GB IT**

(56) Documents cités :
**FR-A- 2 406 869**
**GB-A- 1 048 249**
**US-A- 2 841 347**
**US-A- 3 493 204**
**US-A- 3 965 938**

(73) Titulaire : **Framatome**
**Tour Fiat 1 place de la Coupole**
**F-92400 Courbevoie (FR)**

(72) Inventeur : **Anglaret, Gilbert**
**3, avenue du Bignon**
**78620 L'Etang-la-Ville (FR)**
Inventeur : **Audibert, Alain**
**9, avenue Auguste Rodin**
**F-92190 Meudon (FR)**
Inventeur : **Wolff, René**
**17, rue Paul Doumer**
**F-78110 Le Vesinet (FR)**

(74) Mandataire : **Saint-Martin, René et al**
**CREUSOT-LOIRE 15 rue Pasquier**
**F-75383 Paris Cedex 08 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Dispositif de maintien d'une tuyauterie

La présente invention se rapporte à un dispositif capable de maintenir un élément droit de tuyauterie sur une structure résistante en reprenant les efforts radiaux appliqués à la tuyauterie en autorisant de faibles déplacements axiaux dus à la dilatation. Il fait partie d'un système combiné de supportage de sorties radiales de tuyauterie vapeur comprenant par ailleurs un point fixe de maintien de la tuyauterie. Un tel système est utilisé dans une centrale nucléaire.

Il existe différents types de dispositifs d'attache d'une tuyauterie sur une structure résistante. Dans FR-A-2 406 869 de la demanderesse, un élément droit de tuyauterie est solidaire de plaques carrées qui sont engagées entre deux glissières solidaires de la structure fixe. Par ailleurs l'élément de tuyauterie est attaché à la structure par deux bielles positionnées à distance des glissières et des plaques carrées associées. Chacune de ces bielles est articulée d'une part à l'élément de tuyauterie et d'autre part à la structure. Ces bielles permettent de reprendre les efforts parallèles aux faces des glissières. Si le maintien radial dans toutes les directions est assuré par les glissières et par les bielles articulées, par contre la disposition de ces élements, le long de la tuyauterie, engendre des efforts au niveau des fixations de ces éléments, déportés de la structure fixe.

Dans le dispositif conforme au US-A-2 841 347 la tuyauterie est maintenue sur un support par trois entretoises. Celles-ci sont reliées de manière pivotante d'une part à la tuyauterie d'autre part au support et s'étendent, dans un seul plan perpendiculaire à l'axe de tuyauterie, radialement. Cette disposition n'est pas appropriée pour reprendre les efforts de torsion et de flexion appliqués à la tuyauterie.

Le dispositif conforme au GB-A-1 048 249, comporte des pièces de liaison qui sont accouplées chacune au support par une articulation et à la tuyauterie par des liaisons permettant l'articulation et le coulissement radial. Cette disposition n'est pas appropriée pour reprendre certains efforts appliqués à la tuyauterie.

La présente invention a pour objet un dispositif de maintien d'une tuyauterie à une structure résistante permettant de reprendre les efforts de torsion ou de flexion appliqués à la tuyauterie dans toutes les directions possibles. La conception du dispositif permet de l'adapter à des efforts plus ou moins importants. Le pont thermique, entre la tuyauterie et les parties métalliques ancrées à la structure de support, est réduit au minimum et les interruptions de calorifuge sur la tuyauterie sont limitées. Le dispositif autorise des gradients de température importants du fait de l'absence de guidage par patins et permet de maintenir les ancrages, sur la structure résistante, à un niveau de température acceptable. Le montage est simple et les possibilités de réglage sont très larges. Ce dispositif autorise aussi des déplacements axiaux faibles de la tuyauterie, par rapport au point fixe situé en amont.

Le dispositif de maintien selon l'invention permet d'attacher une tuyauterie à au moins une semelle d'ancrage scellée à une structure résistante et comporte des pièces d'attelage rectilignes réunies à la semelle d'ancrage et attachées par des articulations à la tuyauterie de manière que leurs axes longitudinaux soient perpendiculaires à l'axe de la tuyauterie et il est caractérisé par le fait que lesdites pièces d'attelage situées sensiblement dans un plan perpendiculaire à l'axe de tuyauterie ont leurs axes disposés selon les côtés d'un triangle de manière à transmettre les couples de torsion appliqués à la tuyauterie.

Selon une caractéristique de l'invention, les pièces d'attelage sont disposées dans une pluralité de plans perpendiculaires à l'axe de tuyauterie contenant chacun au moins deux dites pièces d'attelage.

L'invention va maintenant être décrite avec plus de détails en se référant à des modes de réalisation donnés à titre d'exemples et représentés par les dessins annexés.

La figure 1 est une vue d'ensemble d'un système combiné de supportage comprenant le dispositif selon l'invention.

La figure 2 est une vue en élévation — avec une coupe partielle — d'un premier mode de réalisation du dispositif de maintien selon l'invention.

La figure 3 représente une coupe selon A-A de la figure 1.

La figure 4 est une vue en élévation d'une variante du dispositif représenté par les figures 2 et 3.

La figure 5 représente une coupe B-B de la figure 4.

La figure 6 représente une vue en élévation d'un second mode de réalisation du dispositif selon l'invention.

La figure 7 est une coupe selon C-C de la figure 6.

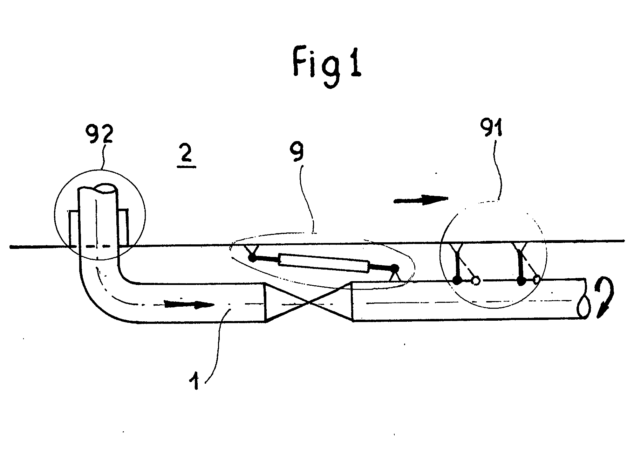

Le dispositif selon l'invention est intégré dans un système combiné de supportage représenté par la figure 1. La tuyauterie 1 est maintenue sur une structure résistante 2 d'une part par le dispositif de maintien repéré dans son ensemble par la référence 91 et d'autre part un point fixe 92. Un tirant 9 est lié à la structure 2 et à la tuyauterie.

Ce tirant est un tirant auto-bloquant qui assure une liaison souple à résistance limitée dans le cas d'une variation lente (dilatation, contraction) mais permet un blocage dans le cas d'une variation rapide (rupture de tuyauterie, séisme...). Ce système combiné de supportage doit permettre de protéger le tronçon de la tuyauterie, et en particulier le robinet d'isolement placé sur celui-ci.

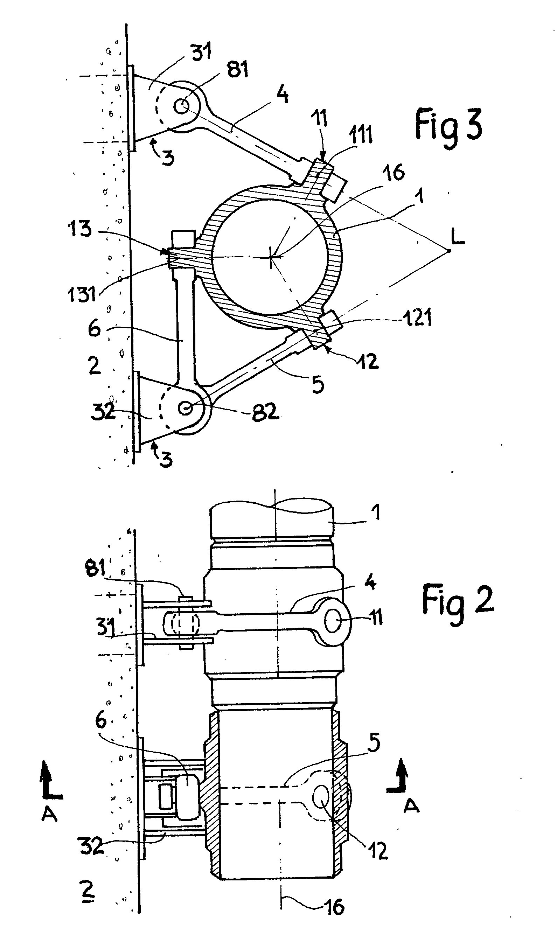

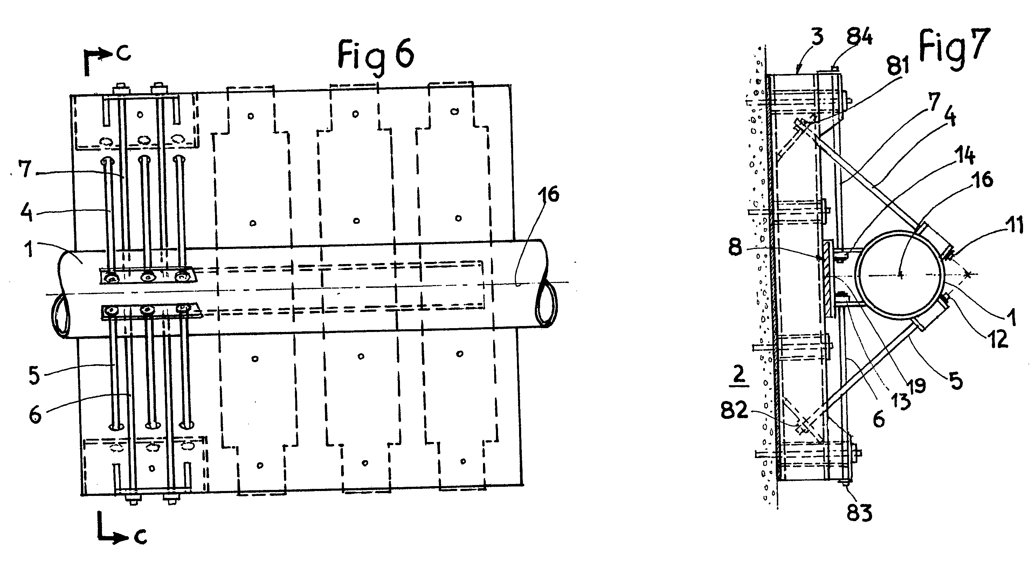

La tuyauterie est maintenue sur la structure résistante 2 par l'intermédiaire d'une semelle d'ancrage 3. Cette semelle est en plusieurs éléments séparés (figures 2 à 5) ou est monobloc (figures 6 et 7). Elle est ancrée à la structure 2 à l'aide par exemple de tirants de scellement précontraints.

La tuyauterie 1 est reliée à la semelle d'ancrage 3 par des pièces d'attelage 4, 5, 6 (figures 2 à 5) ou 4, 5, 6, 7 (figures 6 et 7). Chaque pièce d'attelage est rectiligne à la manière d'un tirant ou d'une bielle. Elle est reliée à ses extrémités par deux articulations d'une part à la tuyauterie d'autre part à la semelle. Les pièces d'attelage 4 sont reliées par les articulations 11 à la tuyauterie et par les articulations 81 à la semelle. Les pièces d'attelage 5 sont reliées par les articulations 12 à la tuyauterie et par les articulations 82 à la semelle. Les pièces d'attelage 6 sont reliées par les articulations 13 à la tuyauterie et par les articulations 82 ou 83 à la tuyauterie. Les pièces d'attelage 7 sont reliées par les articulations 14 à la tuyauteire et par les articulations 84 à la semelle. La tuyauterie est reliée aux pièces d'attelage par au moins trois articulations 11 à 14, situées à 120° l'une par rapport à l'autre.

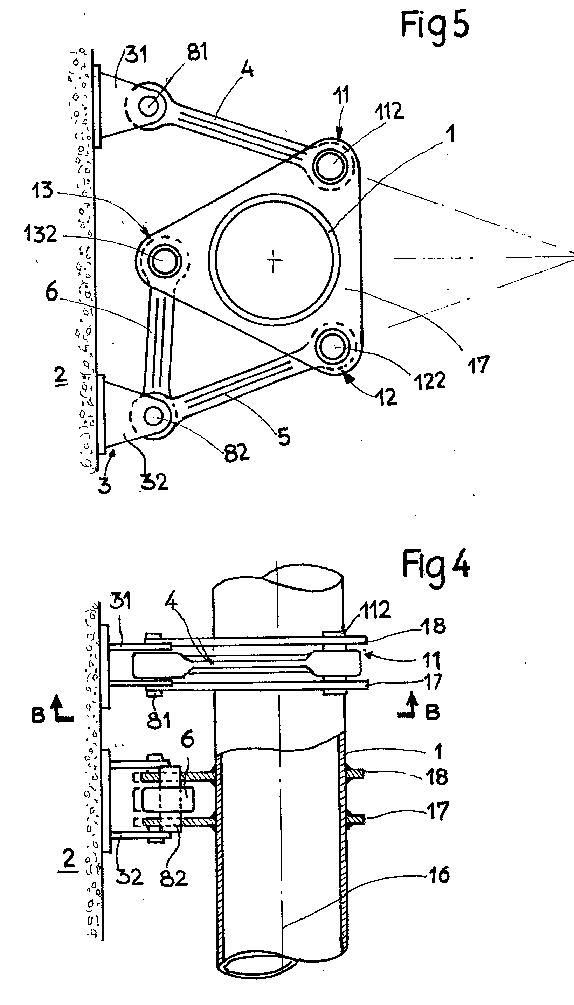

Les axes longitudinaux des pièces d'attelage sont disposés dans une pluralité de plans perpendiculaires à l'axe 16 de la tuyauterie. Chaque plan contient au moins deux pièces d'attelage. Dans le mode de réalisation des figures 2 et 3, le plan A-A. contient trois pièces d'attelage 4, 5, 6.

Les pièces d'attelage 4 ou 5 ou 6 ou 7 sont placées dans un plan parallèle à l'axe de la tuyauterie.

Les axes longitudinaux des pièces d'attelage d'un même plan perpendiculaire à l'axe de la tuyauterie sont disposés, selon les côtés d'un triangle. Dans les modes de réalisation des figures 2 à 5, les trois pièces d'attelage 4, 5, 6 d'un même plan sont articulées à la semelle par deux articulations seulement, les pièces d'attelage 5 et 6 ayant un axe d'articulation commun 82.

Dans les modes de réalisation des figures 2 à 5, les articulations 81 et 82 des pièces d'attelage sur la semelle sont des articulations à rotule. Ces types d'articulations sont nécessaires pour autoriser les mouvements de dilatation de la tuyauterie selon l'axe 16. Chaque pièce d'attelage 4 est articulée à une chape 31 par l'intermédiaire d'un axe d'articulation 81 et d'une rotule. Chaque pièce d'attelage 5 est articulée avec une pièce d'attelage 6 à une double chape 32 par l'intermédiaire d'un axe d'articulation 82 commun et d'une rotule. Les deux pièces 5 et 6 sont indépendantes. Les axes d'articulation 81 et 82 sont parallèles à l'axe de la tuyauterie.

Dans le mode de réalisation des figures 2 et 3, les articulations 11, 12, 13 sont des articulations cylindriques. Chaque articulation comprend un tourillon radial 111, 121, 131. Chaque tourillon est solidaire de l'élément de tuyauterie et est engagé dans un alésage de la pièce d'attelage. Les tourillons d'un même plan perpendiculaire à l'axe de la tuyauterie sont situés à 120° l'une de l'autre. Les articulations s'étendent dans le plan contenant les pièces d'attelage radialement autour de 16.

Dans le mode de réalisation des figures 4 et 5, les articulations 11, 12, 13 sont des articulations à rotule. Chaque articulation 11, 12, 13 comprend d'une part un tourillon 112, 122, 132, respectivement, qui est parallèle à la tuyauterie et d'autre part une rotule. Ces tourillons sont portés par deux flasques 17 et 18 qui sont soudés à la tuyauterie.

Les différents axes d'articulation 81 des pièces d'attelage 4 sont alignés parallèlement à l'axe de l'élément de la tuyauterie. De même les différents axes d'articulation 82 des pièces d'attelage 5 et 6 sont alignés parallèlement à l'axe de la tuyauterie. Chaque axe longitudinal de pièce d'attelage passe par un tourillon ou un axe d'articulation sur la tuyauterie et par un axe d'articulation 81 ou 82 sur la semelle. Les axes longitudinaux des pièces d'attelage sont disposés selon les trois côtés d'un triangle fictif dont un des sommets est occupé par l'axe d'articulation 82. Les axes longitudinaux des pièces d'attelage d'un même plan perpendiculaire à l'axe de tuyauterie sont concourants deux à deux. De préférence les pièces d'attelage ont des longueurs égales. Le mode de réalisation des figures 6 et 7 comprend des pièces d'attelage 4, 5, 6, 7 qui sont des barres ou tirants ne travaillant qu'en traction. Les barres 4 et 5 sont concourantes et sont situées dans un même plan perpendiculaire à l'axe de l'élément de tuyauterie, les barres 6 et 7 étant légèrement décalées dans un plan voisin. Ces barres 4, 5, 6, 7 sont susceptibles de fléchir pour reprendre la dilatation axiale. Une butée d'appui 8 solidaire de la structure de support 2 est montée sur la semelle d'ancrage 3 du côté de l'élément de tuyauterie. Un butoir 19 solidaire de l'élément de tuyauterie est appliqué contre la surface de glissement de la butée 8 qui permet un appui de l'élément de tuyauterie. La butée et le butoir associé s'étendent parallèlement à l'axe de la tuyauterie sur une longueur correspondant à la longueur occupée par chaque groupe de barres. La butée et le butoir reprennent les efforts exercés perpendiculairement à la tuyauterie vers la structure.

Sur la figure 7, les barres 4, 5, 6 et 7 sont reliées à la tuyauterie par des semi-articulations 11, 12, 13, 14 engagées dans des longerons solidaires de la tuyauterie. Elles sont réunies à la semelle d'ancrage 3 par boulonnage. Les barres peuvent être reliées par les articulations à un manchon épais obtenu par forgeage et formant un élément de tuyauterie.

Les barres 6 et 7 sont alignées deux à deux dans des plans parallèles à l'axe de tuyauterie et sont situées du côté du butoir et de la butée. Les barres 4 et 5 sont contenues dans deux plans qui se coupent suivant une ligne située au-delà de la tuyauterie par rapport à la structure de support et sont symétriques par rapport au plan passant par l'axe de la tuyauterie et perpendiculaire aux bielles 6 et 7. Les bielles 4 et 5 sont montées de manière que les articulations 11 et 12 sur la tuyauterie soient relativement proches et que les points d'attache 81 et 82 sur la semelle soient relativement éloignés. Les articulations 13 et 14 des barres 6 et 7 sont assurées sur un étrier commun, les barres 6 et 7 étant montées de part et d'autre de cet étrier commun. L'étrier constitue le butoir.

Le fonctionnement du dispositif va maintenant être décrit.

Dans les modes de réalisation des figures 2 à 5, l'articulation des pièces d'attelage sur la semelle d'une part et sur l'élément de tuyauterie d'autre part permet les dilatations axiales. Sous l'effet d'un effort radial, l'équilibre se réalise soit par traction, soit par compression des pièces d'attelage, avec une valeur maximale par pièce d'attelage qui est égale aux 2/3 du vecteur radial dans la section. Sous l'effet d'un couple de torsion, les trois pièces d'attelage associées dans un plan perpendiculaire à l'axe de la tuyauterie sont sollicitées en traction et en compression. Sous l'effet d'un moment de flexion et dans n'importe quelle direction, les pièces d'attelage sont sollicitées par couple soit en traction, soit en compression mais avec toujours une valeur maximale égale aux 2/3 du vecteur de la section.

Dans le mode de réalisation des figures 6 et 7, toutes les pièces d'attelage ou barres travaillent en traction et peuvent fléchir. La butée glissante associée au butoir reprend les efforts radiaux normaux à la surface de glissement qui est parallèle à la paroi de la structure résistante. La souplesse des barres, éventuellement améliorée par semi-articulations, autorise de légers déplacements axiaux dus à la dilatation. La tuyauterie est guidée par appui contre la butée 8. L'ensemble des barres réalise un parfait guidage axial avec un effet de frottement contre la butée 8. Ce frottement est réduit par adjonction d'un matériau glissant approprié. Sous l'effet d'un effort radial, les barres 4, 5, 6, 7 sont mises en traction et la butée 8 encaisse un effort de compression. Sous l'effet d'un couple de torsion tendant à provoquer la rotation de la tuyauterie dans le sens des aiguilles d'une montre, les barres 4 et 6 sont mises en traction de manière à s'opposer à la rotation. Sous l'effet d'un couple de torsion tendant à provoquer une rotation en sens inverse, ce sont les barres 5 et 7 qui sont mises en traction. Sous l'effet d'un moment de flexion tendant à décoller l'extrémité de l'élément de tuyauterie par rapport à la structure résistante 2, l'équilibre se réalise par traction dans les barres voisines du point d'application du moment et par compression sur la partie de la butée 8 située du côté opposé. Si le moment tend à rapprocher la tuyauterie de la structure résistante, les effets sont inversés. Sous l'effet d'un moment tendant à déplacer l'extrémité de l'élément de tuyauterie 1, parallèlement à la paroi de la structure de support, l'équilibre se réalise par les barres situées du côté opposé au déplacement. Les barres situées au centre de l'ensemble ne sont alors pratiquement pas sollicitées.

Il est bien entendu que l'on peut sans sortir du cadre de l'invention imaginer des variantes et perfectionnements de détails et de même envisager l'emploi de moyens équivalents. C'est ainsi que les barres 4, 5, 6 représentées aux figures 2 et 3 sont fixées à la tuyauterie par un manchon épais obtenu par forgeage.

## Revendications

1. Dispositif de maintien d'une tuyauterie (1) à au moins une semelle d'ancrage (3) scellée à une structure résistante (2), comportant des pièces d'attelage rectilignes (4, 5, 6) réunies à la semelle d'ancrage (3) et attachées par des articulations (11, 12, 13) à la tuyauterie de manière que leurs axes longitudinaux soient perpendiculaires à l'axe de tuyauterie, caractérisé par le fait que les pièces d'attelage (4, 5, 6) ont leurs axes longitudinaux disposés selon une configuration triangulaire de manière à reprendre les efforts de torsion ou de flexion appliqués à la tuyauterie (1).

2. Dispositif selon la revendication 1, caractérisé par le fait que les pièces d'attelage (4, 5, 6) sont disposées dans une pluralité de plans perpendiculaires à l'axe de tuyauterie contenant chacun au moins deux dites pièces d'attelage.

3. Dispositif selon l'une quelconque des revendications précédentes, caractérisé par le fait qu'il comporte trois pièces d'attelage (4, 5, 6) par plan perpendiculaire à l'axe de tuyauterie, les articulations (11, 12, 13) de ces pièces sur la tuyauterie étant situées à 120° l'une par rapport à l'autre.

4. Dispositif selon la revendication 3, caractérisé par le fait que les articulations (11, 12, 13) des pièces d'attelage (4, 5, 6) sur la tuyauterie sont des articulations cylindriques s'étendant dans le plan (A-A) contenant ces pièces, radialement autour de l'axe (16) de la tuyauterie.

5. Dispositif selon la revendication 3, caractérisé par le fait que les axes d'articulation (112, 122, 132) des pièces d'attelage sur la tuyauterie (1) sont parallèles à l'axe (16) de la tuyauterie.

6. Dispositif selon la revendication 5, caractérisé en ce que les axes d'articulation (112, 122, 132) sont solidarisés entre eux et à la tuyauterie (1) par deux flasques (17-18) soudés à celle-ci.

7. Dispositif selon l'une quelconque des revendications précédentes, caractérisé par le fait que les pièces d'attelage (4, 5, 6) sont réunies à la semelle (3) par des articulations (81, 82, 83, 84), deux desdites pièces d'attelage contenues dans un même plan perpendiculaire à l'axe (16) de la tuyauterie étant liées à la semelle d'ancrage (3) par un axe d'articulation commun (82).

8. Dispositif selon la revendication 1, caractérisé en ce qu'il comprend une butée d'appui (8) solidaire de la structure résistante (2) et en contact par une surface de glissement avec un butoir (19) solidaire de la tuyauterie (1) et au moins quatre pièces d'attelage (4, 5, 6, 7) réparties deux à deux dans des plans perpendiculaires à l'axe (16) de la tuyauterie, dont deux (6, 7) sont situées de part et d'autre du butoir.

9. Dispositif selon l'une quelconque des revendications précédentes, caractérisé par le fait que les pièces d'attelage (4 ou 5 ou 6 ou 7) sont contenues dans des plans parallèles à l'axe (16) de la tuyauterie et concourants suivant une ligne

(L) située au-delà de la tuyauterie par rapport à la structure de support.

10. Dispositif selon l'une quelconque des revendications 1 à 7, caractérisé par le fait que les pièces d'attelage (4, 5, 6) ont des longueurs égales.

## Claims

1. A device for supporting a piece of pipework (1) with at least one anchoring plate (3) sealed to a strong structure (2), comprising rectilinear coupling elements (4, 5, 6) which are connected to the anchoring plate (3) and are attached to the pipework by articulations (11, 12, 13) so that their longitudinal axes are at right angles to the pipework axis, characterised in that the coupling elements (4, 5, 6) have their longitudinal axes arranged in a triangular configuration so as to take up torsion or bending which are applied to the pipework (1).

2. A device according to Claim 1, characterised in that the coupling elements (4, 5, 6) are arranged in a plurality of planes perpendicular to the pipework axis, each plane containing, at least two said coupling elements.

3. A device according to either of the preceding claims, characterised in that it comprises three coupling elements (4, 5, 6) in a plane which is perpendicular to the pipework axis, the articulations (11, 12, 13) of these elements on the pipework being placed at 120° relative to each other.

4. A device according to Claim 3, characterised in that the articulations (11, 12, 13) of the coupling elements (4, 5, 6) on the pipework are cylindrical articulations extending in the plane (A-A) containing these elements, radially around the pipework axis (16).

5. A device according to Claim 3, characterised in that the articulation axles (112, 122, 132) of the elements for coupling on the pipework (1) are parallel to the pipework axis (16).

6. A device according to Claim 5, characterised in that the articulation axles (112, 122, 132) are integrally joined to each other and to the pipework (1) by two flanges (17-18) welded to the latter.

7. A device according to any one of the preceding claims, characterised in that the coupling elements (4, 5, 6) are joined to the plate (3) by articulations (81, 82, 83, 84), two of the said coupling elements, contained in one and the same plane at right angles to the pipework axis (16), being connected to the anchoring plate (3) by a common articulation axle (82).

8. A device according to Claim 1 characterised in that it comprises a bearing pad (8) integrally fixed to the strong structure (2) and in contact through a sliding surface with a buffer (19) integrally fixed to the pipework (1), and at least four coupling elements (4, 5, 6, 7) arranged in pairs in planes which are perpendicular to the pipework axis (16), two of which elements (6, 7) are placed on either side of the buffer.

9. A device according to any one of the preceding claims, characterised in that the coupling elements (4 or 5 or 6 or 7) are contained in planes which are parallel to the pipework axis (16) and intersect along a line (L) located beyond the pipework relative to the supporting structure.

10. A device according to any one of Claims 1 to 7, characterised in that the coupling elements (4, 5, 6) are of equal length.

## Ansprüche

1. Haltevorrichtung für eine Rohrleitung (1) mit mindestens einer an einer widerstandsfähigen Konstruktion (2) befestigten Verankerungsplatte, bestehend aus geraden mit der Verankerungsplatte (3) verbundenen Kupplungsstücke (4, 5, 6), welche mittels Gelenke (11, 12, 13) an der Rohrleitung derart befestigt sind, daß deren Längsachsen senkrecht zur Rohrleitungsachse verlaufen, dadurch gekennzeichnet, daß die Kupplungsstücke (4, 5, 6) mit ihren Längsachsen gemäß einer Dreieckausbildung derart angeordnet sind, daß sie die Biege- bzw. Drallbeanspruchungen der Rohrleitung (1) aufnehmen.

2. Vorrichtung nach Anspruch 1, dadurch gekennzeichnet, daß die Kupplungsstücke (4, 5, 6) in mehreren senkrecht zur Rohrleitungsachse verlaufenden Ebenen angeordnet sind, in denen jeweils mindestens zwei dieser Kupplungsstücke liegen.

3. Vorrichtung nach einem der vorhergehenden Ansprüche, dadurch gekennzeichnet, daß sie drei Kupplungsstücke (4, 5, 6) je senkrecht zur Rohrleitungsachse verlaufende Ebene aufweist, wobei die Gelenke (11, 12, 13) dieser Kupplungsstücke auf der Rohrleitung um 120° gegeneinander versetzt sind.

4. Vorrichtung nach Anspruch 3, dadurch gekennzeichnet, daß die Gelenke (11, 12, 13) der Kupplungsstücke (4, 5, 6) auf der Rohrleitung Zylindergelenke sind, die radial um die Rohrleitungsachse (16) in der diese Stücke aufweisende Ebene (A-A) liegen.

5. Vorrichtung nach Anspruch 3, dadurch gekennzeichnet, daß die Gelenkachsen (112, 122, 132) der Kupplungsstücke auf der Rohrleitung (1) parallel zur Rohrleitungsachse (16) verlaufen.

6. Vorrichtung nach Anspruch 5, dadurch gekennzeichnet, daß die Gelenkachsen (112, 122, 132) untereinander und mit der Rohrleitung (1) mittels zwei an dieser angeschweissten Flansche (17-18) verbunden sind.

7. Vorrichtung nach einem der vorhergehenden Ansprüche, dadurch gekennzeichnet, daß die Kupplungsstücke (4, 5, 6) über Gekenke (81, 82, 83, 84) mit der Verankerungsplatte (3) verbunden sind, wobei zwei dieser in ein und derselben Ebene liegenden Kupplungsstücke, die senkrecht zur Rohrleitungsachse (16) verläuft, über eine gemeinsame Gelenkachse (82) mit der Verankerungsplatte (3) verbunden sind.

8. Vorrichtung nach Anspruch 1, dadurch gekennzeichnet, daß sie ein an der widerstandsfähigen Konstruktion (2) befestigtes Stützlager (8) umfaßt, das über eine Gleitfläche mit einem an der Rohrleitung (1) befestigten Anschlag (19) in Kontakt steht sowie mindestens vier Kupplungsstücke (4, 5, 6, 7) die paarweise in senkrecht zur Rohrleitungsachse (16) verlaufenden Ebenen verteilt sind, wobei zwei (6, 7) beiderseits des Anschlags angeordnet sind.

9. Vorrichtung nach einem der vorhergehenden Ansprüche, dadurch gekennzeichnet, daß die Kupplungsstücke (4 bzw. 5 bzw. 6 bzw. 7) in parallel zur Rohrleitungsachse (16) verlaufenden Ebenen liegen, welche über eine Linie (L) gehen, die zur Stützkonstruktion über der Rohrleitung hinaus liegt.

10. Vorrichtung nach einem der Ansprüche 1 bis 7, dadurch gekennzeichnet, daß die Kupplungsstücke (4, 5, 6, 7) gleiche Längen aufweisen.

Fig 1

0 031 767

Fig 3

Fig 2

2

Fig 5

Fig 4

Fig 6

Fig 7

0 031 767